# EUROPÄISCHE PATENTSCHRIFT

(11) **EP 1 416 441 B1**
(45) Veröffentlichungstag und Bekanntmachung des Hinweises auf die Patenterteilung: **12.09.2007**
(21) Anmeldenummer: 03024692.0
(22) Anmeldetag: 28.10.2003
(51) Int. Cl.: G06T 5/00

(54) **Verfahren und Vorrichtung zur automatischen Segmentierung eines Vordergrundobjektes in einem Bild**
Method and apparatus for automatic image segmentation of a foreground-object
Procédé et dispositif de segmentation d'image automatique d'un objet de premier plan

(30) Priorität: 30.10.2002 DE 10250781
(43) Veröffentlichungstag der Anmeldung: 06.05.2004
(73) Patentinhaber: ORGA Systems GmbH, 33104 Paderborn (DE)
(72) Erfinder: Büker, Ulrich, 33161 Hövelhof (DE); Oeynhausen, Dirk, 33098 Paderborn (DE)

(56) Entgegenhaltungen:
- US-A1- 2002 085 739
- US-B1- 6 298 149
- MACAULAY C ET AL: "A COMPARISON OF SOME QUICK AND SIMPLE THRESHOLD SELECTION METHODS FOR STAINED CELLS" ANALYTICAL AND QUANTITATIVE CYTOLOGY AND HISTOLOGY, ST. LOUIS, MO, US, Bd. 10, Nr. 2, April 1988 (1988-04), Seiten 134-138, XP002908913 ISSN: 0884-6812
- WESZKA J S: "A SURVEY OF THRESHOLD SELECTION TECHNIQUES" COMPUTER GRAPHICS AND IMAGE PROCESSING, ACADEMIC PRESS. NEW YORK, US, Bd. 7, Nr. 2, April 1978 (1978-04), Seiten 259-265, XP001149105

## Beschreibung

Die Erfindung bezieht sich auf ein Verfahren zur Segmentierung eines Vordergrundobjektes in einem Bild, umfassend die Verfahrensschritte: Bereitstellen eines digitalen Szenenbildes mit einem zu segmentierenden Vordergrundobjekt und einem Hintergrund, Bereitstellen eines den Hintergrund repräsentierenden, digitalen Referenzbildes, Erzeugen eines die pixelweise Differenz zwischen dem Szenenbild und dem Referenzbild repräsentierenden Differenzbildes, pixelweises Vergleichen eines Differenzbildes mit einem bestimmten Schwellenwert, Zuordnung jedes Pixels des Szenenbildes zu entweder dem Hintergrund oder dem Vordergrundobjekt auf Basis des Schwellenwertvergleichs und Erzeugung eines das segmentierte Vordergrundobjekt enthaltenden Ergebnisbildes.

Die Erfindung bezieht sich weiter auf eine Vorrichtung zur Segmentierung eines Vordergrundobjektes in einem Bild, umfassend: Bildbereitstellungsmittel zum Bereitstellen eines digitalen Szenenbildes mit einem zu segmentierenden Vordergrundobjekt und einem Hintergrund und zum Bereitstellen eines den Hintergrund repräsentierenden digitalen Referenzbildes, Bildbearbeitungsmittel zum Erzeugen und Bearbeiten von digitalen Bildern aufgrund mathematischer und/oder logischer Operationen, Bildausgabemittel zur Ausgabe eines von den Bildbearbeitungsmitteln erzeugten Ergebnisbildes sowie Steuerungsmittel zur Ansteuerung der Bildbereitstellungs-, Bildbearbeitungs- und Bildausgabemittel nach einem vorgegeben Ablaufplan.

Derartige Verfahren und Vorrichtungen sind bekannt und finden Anwendung etwa im Multimediabereich oder der professionellen Bildverarbeitung. Das angestrebte Ziel dabei ist es, aus einem Bild automatisch einen interessierenden Objektbereich, das Vordergrundobjekt, zu extrahieren, um ihn ggf. anderweitig separat weiterverarbeiten zu können. Die Begriffe "Vordergrundobjekt" und "Hintergrund" beziehen sich dabei nicht notwendig auf die räumliche Anordnung der Gegenstände im Bild, sondern werden durch die Interessenlage des Benutzers definiert.

Beispielsweise kann es gewünscht sein, aus einem Bild den Kopf einer darauf abgebildeten Person zusammen mit einem Ausschnitt des Hals- und Schulterbereichs zu extrahieren und alle übrigen Bildbereiche zu löschen. Eine solche Anwendung ist etwa bei der Herstellung von ldentifikationsdokumenten, wie z.B. Personalausweisen, Betriebsausweisen o.ä. wünschenswert. Wird nämlich nur der eigentlich interessierende Bildbereich auf die Dokumentvorlage gedruckt und der Hintergrund ausgespart, ergeben sich wesentliche Einsparungen hinsichtlich der für den Druck benötigten Zeit und des Druckfarbenverbrauchs. Auch verringert sich die bedruckte Fläche, wodurch mehr Fläche zur Unterbringung anderer Informationen, wie etwa Merkmalen zur Verbesserung der Fälschungssicherheit, bleibt. Ist eine parallele oder alternative Speicherung des digitalen Bildes z.B. in einem Chip eines elektronisch lesbaren Ausweisdokuments vorgesehen, ergibt sich zudem eine Einsparung an Speicherplatz. Weitere Vorteile ergeben sich in dem Fall, dass das Bild zur automatisierten Analyse biometrischer Merkmale herangezogen werden soll. Zum einen verringert sich auch hier der benötigte Speicherplatz; zum anderen können vereinfachte und schnellere Algorithmen angewandt werden, da ein wesentlicher Vorbereitungsschritt, nämlich die Erkennung und Extraktion des zu analysierenden Bereichs bereits erfolgt ist.

Herkömmliche, im Privatbereich eingesetzte Multimedia-Verfahren, die eine Extraktion aufgrund einer groben Umrissabschätzung vornehmen, sind insbesondere bei der Erstellung von Bildern für Ausweisdokumente ungeeignet, da hier eine qualitativ hochwertige, pixelgenaue Extraktion des interessierenden Vordergrundobjektes erforderlich ist.

Aus DE 199 41 644 A1 sind ein gattungsbildendes Verfahren zur echtzeitfähigen Segmentierung von Videoobjekten bei bekanntem, stationärem Bildhintergrund sowie eine entsprechende Vorrichtung bekannt. Bei diesem Verfahren wird außer dem eigentlichen, zu segmentierenden Szenenbild eine Vielzahl von Bildern aufgenommen, die nur den Hintergrund ohne das interessierende Objekt darstellen und aus denen das Referenzbild als pixelweises, arithmetisches Mittel gebildet wird. Das Differenzbild wird durch pixelweise Subtraktion von Szenen- und Referenzbild erzeugt. Außerdem wird ein Schwellenwertbild erzeugt, in dem für jeden Pixel die maximale Abweichung zwischen den aufgenommenen Hintergrundbildern und dem aus ihnen gemittelten Referenzbild gespeichert wird. Die Zuordnung der einzelnen Pixel des Szenenbildes zu entweder dem Vordergrundobjekt oder dem Hintergrund erfolgt dann auf Grundlage eines Vergleichs des Differenzbildes mit dem Schwellenwertbild. Dieses Verfahren weist verschiedene Nachteile auf. Zum einen leidet es an einem erheblichen Speicherbedarf, da nicht nur Szenen- und Referenzbild, sondern auch eine Vielzahl von Hintergrundbildern gespeichert werden müssen, auf die zur Berechnung des Schwellenwertbildes zurückgegriffen werden muss. Zum anderen sind für die Berechnung von Referenz- und Schwellenwertbild sehr viele Rechenoperationen und Speicherzugriffe erforderlich, die das Verfahren verlangsamen. Schließlich kann das Verfahren nur dann erfolgreich angewandt werden, wenn sichergestellt ist, dass das Vordergrundobjekt nirgends die gleichen Pixelwerte erzeugt, wie der dahinter liegende Hintergrund. Für monochrome Bilder ist das Verfahren daher völlig ungeeignet; für farbige Aufnahmen ist es nur insoweit geeignet, als eine farbliche Übereinstimmung von Vordergrundobjekt und Hintergrund ausgeschlossen werden kann, was z.B. bei menschlichen Gesichtern vor einem Holzhintergrund oder im Hinblick auf die große Variabilität von Haarfarben und Kleidung schwierig ist.

Aus WO 00/34919 sind ein Verfahren und eine Vorrichtung zur Abschätzung und Segmentierung, von bewegten Objekten aus Videobildern bekannt. Bei diesem Verfahren werden über längere Zeiten farbige Stereobilder aufgenommen und für jeden Pixelort mehrdimensionale Histogramme in Bezug auf verschiedene Pixelwerte, wie Farbe und räumliche Tiefe zu verschiedenen Zeiten erstellt. Durch Clusterbildung innerhalb der Histogramme kann für jeden Pixelort ein typischer, sich dynamisch ändernder Hintergrundwert berechnet werden. Bei plötzlicher Abweichung von diesem Hintergrundwert wird der betreffende Pixel einem bewegten Vordergrundobjekt zugeordnet. Dieses Verfahren, das sehr gut für die Überwachung bewegter Szenen bei relativ schlechter Bildqualität geeignet ist, ist für eine schnelle und kostengünstige Erfassung und Bearbeitung qualitativ höherwertiger Bilder, bei denen schnelle Bewegungen jedoch keine Rolle spielen, zu aufwendig und liefert zu ungenaue Resultate.

Es ist Aufgabe der vorliegenden Erfindung, ein gattungsgemäßes Verfahren derart weiterzubilden, dass eine zuverlässigere und weniger aufwendige Segmentierung von Vordergrundobjekten ermöglicht wird.

Es ist eine weitere Aufgabe der vorliegenden Erfindung eine gattungsgemäße Vorrichtung derart weiterzubilden, dass mit ihr eine zuverlässigere und weniger aufwendige Segmentierung von Vordergrundobjekten durchführbar ist.

Die erstgenannte Aufgabe wird erfindungsgemäß in Verbindung mit dem Oberbegriff des Anspruchs 1 dadurch gelöst, dass der Schwellenwert festgelegt wird, indem zunächst in dem Differenzbild eine räumliche Abschätzung der dem Vordergrundobjekt zuzuordnenden Pixel aufgrund dessen äußerer Konturen vorgenommen und der Schwellenwert dann anhand einer oder mehrerer Eigenschaften des Ensembles der übrigen Pixel des Differenzbildes bestimmt wird.

Die zweitgenannte Aufgabe wird erfindungsgemäß in Verbindung mit dem Oberbegriff des Anspruchs 19 dadurch gelöst, dass die Steuerungsmittel derart eingerichtet sind, dass sie zur Durchführung des vorgenannten, erfindungsgemäßen Verfahrens geeignet sind.

Ganz besonders wesentlich für eine gute Trennung zwischen Vordergrundobjekt und Hintergrund bei allen Verfahren, die auf der Erzeugung eines Differenzbildes basieren, ist die geeignete Wahl des Schwellenwertes, anhand dessen die entsprechende Einteilung vorgenommen wird. Im Gegensatz zum Stand der Technik, bei dem ein pixelweiser, also lokaler Schwellenwert verwendet wird, der sich aus einer großen, zuvor gespeicherten Datenmenge berechnet, ist im Rahmen der vorliegenden Erfindung vorgesehen, einen für alle Pixel gleichen, also globalen Schwellenwert zu verwenden, der sich aus dem zu beurteilenden Differenzbild selbst ergibt. Hierdurch wird erheblicher Speicherplatz eingespart und der erforderliche Rechenaufwand wesentlich reduziert. Die Segmentierung erfolgt trotz der einfachen Wahl eines globalen Schwellenwertes äußerst präzise, weil erfindungsgemäß vorgesehen ist, dass der Schwellenwert nur aus denjenigen Pixel bestimmt wird, die nach einer vorangehenden, groben und allein nicht ausreichenden Abschätzung des Vordergrundobjektes anhand seiner äußeren Konturen dem Hintergrund zuzuordnen sind. Erfindungsgemäß werden also Form- und Helligkeits- bzw. Farbinformationen derart kombiniert, dass ein globaler Schwellenwert mit solcher Präzision gefunden werden kann, dass eine pixelgenaue Segmentierung mit minimalem Aufwand möglich wird. Die räumliche Abschätzung des Vordergrundobjektes aufgrund seiner äußeren Konturen ist in dem Differenzbild mit sehr einfachen und schnellen Rechenoperationen durchzuführen, da der Bereich des Vordergrundobjektes der einzige in dem Differenzbild ist, der überhaupt nennenswerte Konturen aufweist. Der Hintergrundbereich ist in dem Differenzbild im Wesentlichen gleich Null, wobei Abweichungen hiervon einerseits auf statistischen Messfehlern (Schwankungen einer Belichtungszeit, Digitalisierungsfehler etc.) und andererseits auf systematischen Fehlern einer falschen Modellannahme des Hintergrundes beruhen können. Die erfindungsgemäße Bestimmung des Schwellenwertes aus dem Differenzbild selbst berücksichtigt beide Fehlerarten - im Gegensatz zum Stand der Technik, bei dem nur die statistischen Fehler einfließen.

Zur Ermittlung der äußeren Konturen des Vordergrundobjektes ist bei einer vorteilhaften Weiterbildung der Erfindung vorgesehen, dass ein Kantenalgorithmus, vorzugsweise ein Canny-Kantenalgorithmus, auf das Differenzbild angewandt wird. Dieser extrahiert in einer dem Fachmann bekannten Weise Kanten aus einem Bild. Durch Anwendung eines Kantenalgorithmus auf das Differenzbild kann eine grobe räumliche Abschätzung von Vordergrundobjekt und Hintergrund vorgenommen werden.

In der Regel, insbesondere in Fällen, in denen es sich bei dem Vordergrundobjekt um einen menschlichen Kopf handelt, sind keine abrupten Richtungswechsel der äußeren Kontur oder tiefe Einschnitte zu erwarten. Offene Kantenzüge werden daher in der Regel als Fehler des Kantenalgorithmus zu werten sein. Es kann deshalb vorteilhafter Weise vorgesehen werden, die mittels des Kantenalgorithmus berechneten Kantenzüge mittels morphologischer Operationen zu schließen und alle innerhalb der geschlossenen Kantenzüge liegenden Pixel als zu dem Vordergrundobjekt gehörig abzuschätzen.

Um sicher zu stellen, dass auf diese Weise keine Pixel des Vordergrundobjektes fälschlich als zum Hintergrund gehörig abgeschätzt werden und in die Bestimmung des Schwellenwertes einfließen, kann die Fläche des Vordergrundobjektes, z.B. durch die einoder mehrfache Anwendung eines Dilate-Algorithmus, geringfügig vergrößert werden.

Es hat sich als günstig erwiesen, als Schwellenwert den maximalen Pixelwert des Ensembles der übrigen Pixel des Differenzbildes, also der als zum Hintergrund gehörig abgeschätzten Pixel zu bestimmen. Damit wird erreicht, dass bei der abschließenden Zuordnung der Pixel alle Pixel des abgeschätzten Hintergrundes auch endgültig dem Hintergrund zugeordnet werden, während Pixel des abgeschätzten Vordergrundobjektes aufgrund des Schwellenwertvergleichs noch dem Hintergrund zugeordnet werden können.

Hierbei kann es jedoch vorkommen, dass Pixel des Vordergrundobjektes, die im Szenenbild ähnliche Pixelwerte aufweisen, wie die korrespondierenden Pixel des Referenzbildes, die also im Differenzbild sehr kleine Werte haben, im Rahmen des Schwellenwertvergleichs dem Hintergrund zugeordnet werden. Bei einer besonders vorteilhaften Weiterbildung des erfindungsgemäßen Verfahrens ist daher vorgesehen, dass nach der Zuordnung jedes Pixels auf Basis des Schwellenwertvergleichs alle Pixel, die innerhalb einer äußeren Kontur der dem Vordergrundobjekt zugeordneten Pixelfläche liegen und dem Hintergrund zugeordnet sind, dem Vordergrundobjekt zugeordnet werden. Diese Korrekturmaßnahme vermeidet "Löcher" im Ergebnisbild. Sie kann in ähnlicher Weise realisiert werden, wie oben im Zusammenhang mit der Konturabschätzung im Differenzbild erläutert.

Die oben erläuterten Ausbildungen des erfindungsgemäßen Verfahrens eignen sich gleichermaßen für alle gängigen Formen der Informationscodierung in einem Bild. Eine besonders weit verbreitete Form der Codierung farbiger Bilder ist die Aufteilung der Bildinformation in mehrere (meist drei) Einzelbilder, die unterschiedlichen Farbkanälen zugeordnet sind, welche von geeigneten Bildausgabevorrichtungen pixelweise zur Berechnung des jeweiligen Farbwertes zusammengesetzt werden. Gängige Standards sind z.B. RGB (rot-grün-blau), CMY (cyan-magenta-gelb), HSI (Farbwinkel-Sättigung-Intensität) und andere. Eine besonders vorteilhafte Weiterbildung der Erfindung zeichnet sich daher dadurch aus, dass das Szenenbild eines von mehreren Einzelkanalbildern eines mehrkanaligen Ursprungsbildes ist. Insbesondere wurde als günstig erkannt, alle aufeinander folgenden Verfahrensschritte bis einschließlich desjenigen der Zuordnung jedes Pixels auf Basis des Schwellenwertvergleichs, in wenigstens zwei Farbkanälen eines mehrkanaligen Ursprungsbildes individuell anzuwenden und zur Erzeugung des Ergebnisbildes dem Vordergrundobjekt alle diejenigen Pixel zuzuordnen, die auf Basis der individuellen Schwellenwertvergleiche in irgendeinem der bearbeiteten Einzelkanalbilder dem Vordergrundobjekt zugeordnet wurden. Das bedeutet, mit anderen Worten, dass zunächst anhand jedes Einzelkanalbildes eine vorzugsweise binäre Schnittschablone erstellt wird, die im Prinzip geeignet wäre in dem Einzelkanal-Szenenbild eine gute Separation des Vordergrundobjektes durchzuführen. Soll die Separation jedoch für das mehrkanalige Gesamtbild optimiert werden, hat es sich als günstig erwiesen, die Einzelkanal-Schnittschablonen mit ODER-Verknüpfungen zu verbinden, also jeden Pixel, der in irgendeiner Schnittschablone den Vordergrundobjekt zugeordnet wurde, auch in der Gesamt-Schnittschablone dem Vordergrundobjekt zuzuordnen. Obwohl sich diese ODER-Verknüpfung als vorteilhaft erwiesen hat, ist es selbstverständlich auch möglich, je nach spezieller Zielsetzung und/oder Wahl eines speziellen Farbraums einzelne oder alle Einzelkanal-Schnittschablonen durch andere Verknüpfungen, z.B. eine UND-Verknüpfung zu verbinden.

Bislang wurde von dem erfindungsgemäßen Verfahren im Wesentlichen derjenige Teil beschrieben, der sich an die Berechnung des Differenzbildes aus dem Szenenbild und dem Referenzbild ergibt. Nachfolgend sollen zwei prinzipielle Varianten der Bereitstellung von Szenen- und Referenzbild beschrieben werden, die eine unterschiedliche Aufbereitung des Quellbildes bzw. der Quellbilder erfordern. Beide Varianten sind auch isoliert zur Bereitstellung von einander zugeordneten Szenen- und Referenzbildern zur anderweitigen, nachfolgenden Verarbeitung geeignet.

Häufig, insbesondere bei der Produktion von amtlichen Ausweisdokumenten, liegt als Bildvorlage für das erfindungsgemäße Verfahren eine Fotographie, z.B. ein typisches Passfoto, etwa gemäß den Vorgaben der Bundesdruckerei, vor, das eingescannt, auf andere Weise digitalisiert wird oder bereits digital aufgenommen wurde. Dies stellt einerseits im Hinblick auf die Bereitstellung des Szenenbildes bzw. im Fall verschiedener Farbkanäle der Szenenbilder eine günstige Voraussetzung dar. Andererseits ist die Bereitstellung eines Referenzbildes insofern erschwert, als keine "wahre" Aufnahme des Hintergrundes ohne das Vordergrundobjekt existiert. Gemäß einer besonders bevorzugten Ausführungsform der Erfindung ist daher vorgesehen, dass das zur Bereitstellung des Referenzbildes wenigstens ein Hintergrundbild als Extrapolation der Pixelwerte eines Randbereichs des Szenenbildes erzeugt wird. Dem liegt die Annahme zugrunde, dass der gesamte Hintergrund ähnlich gestaltet ist, wie sein Randbereich. Als relevanter, d.h. zu extrapolierender Randbereich hat sich ein Bereich bewährt, der sich aus einer oder mehreren Zeilen bzw. Spalten des oberen bzw. eines seitlichen Randes des Szenenbildes zusammensetzt. Im fall verschiedener Farbkanäle kann ein solches Hintergrundbild in jedem Farbkanal extrapoliert werden.

Bei der Wahl eines Streifens aus einer oder mehreren Zeilen oder Spalten parallel zu einer oberen oder seitlichen Begrenzung des Szenenbildes können nur Farb- bzw. Intensitätsverläufe erfasst werden, die im Wesentlichen senkrecht zu diesem Streifen verlaufen. Dies gilt insbesondere, wenn der gewählte Streifen nur eine Zeile oder eine Spalte breit ist.

Um den "wahren" Hintergrund besser berücksichtigen zu können, ist daher bei einer besonders bevorzugten Weiterbildung der Erfindung vorgesehen, dass zur Erzeugung eines Differenzbildes mehrere vorläufige Differenzbilder erzeugt werden, wobei jeweils eines von mehreren, aus unterschiedlichen Randbereichen extrapolierten Hintergrundbildern als Referenzbild dient. Anschließend können die vorläufigen Differenzbilder zu dem eigentlichen Differenzbild, das den weiteren Schritten zugrunde gelegt wird, überlagert werden. Für den Fall mehrerer Farbkanäle bedeutet dies, dass zunächst in jedem Farbkanal mehrere Hintergrundbilder durch unterschiedliche Extrapolationen erzeugt werden, z.B. durch Extrapolation der obersten Zeile sowie der äußersten Spalten. Bei z.B. drei Farbkanälen ergeben sich damit neun Hintergrundbilder. Jedes dieser Hintergrundbilder dient dann als Referenzbild für die Erzeugung eines vorläufigen Differenzbildes. Die jeweiligen, vorläufigen Differenzbilder - z.B. drei pro Farbkanal - werden anschließend zu je einem Differenzbild pro Farbkanal überlagert. Die Überlagerung kann beispielsweise durch pixelweise Addition oder auf andere Weise erfolgen. So können auch komplexe Farbverläufe des Hintergrundes bei der Berechnung des Differenzbildes sehr gut berücksichtigt werden.

Ein weiterer, typischer Fall ist die Segmentierung eines Vordergrundobjektes unmittelbar im Anschluss an eine digitale Aufnahme. Dieser Fall ist beispielsweise gegeben, wenn Ausweisdokumente sehr kurzfristig erstellt werden müssen, wie dies etwa für Teilnehmerausweise bei Kongressen, Besucherausweise in Firmen oder Behörden oder Zeitfahrkarten für öffentliche Transportmittel gilt. Die Aufnahme erfolgt dabei bevorzugt durch eine fest installierte Digitalkamera. Günstigerweise kann dabei vorgesehen sein, dass das Referenzbild ein vorzugsweise zeitnah zu dem Szenenbild aufgenommenes, weiteres Bild desselben Ausschnitts wie das Szenenbild mit dem Hintergrund und ohne das zu segmentierende Vordergrundobjekt ist. Dies wird beispielsweise in einfacher Weise und ohne zusätzliche Kosten realisiert, indem kurz vor oder nach der eigentlichen Aufnahme des Vordergrundobjektes, also z.B. der einen Ausweis beantragenden Person, von der fest installierten Kamera eine weitere Aufnahme ohne diese Person gemacht wird. Durch die zeitliche Nähe der Aufnahmen wird sichergestellt, dass inzwischen keine Änderungen der Beleuchtungsverhältnisse oder Verstellungen der Kamera auftreten. Das Referenzbild gibt also im Wesentlichen den "wahren" Hintergrund wieder.

Da bei derartigen Anwendungen vorzugsweise mit fest installierten Kameras gearbeitet wird müssen diese, um auch unterschiedliche große oder unterschiedlich positionierte Personen zuverlässig zu erfassen, einen relativ großen Aufnahmewinkel aufweisen. Die Aufnahme ist somit oft wesentlich größer als für das zu erstellende Dokument erforderlich. Bei einer vorteilhaften Weiterbildung ist daher vorgesehen, dass das Szenenbild und das Referenzbild einander entsprechende Ausschnitte aus je einem größeren Gesamtbild sind, wobei die Ausschnitte mittels eines zusätzlichen Verfahrensschritts zur automatischen Lokalisation eines interessierenden Gegenstandes in dem Szenen-Gesamtbild erfolgt. Insbesondere ist es günstig, wenn der Lokalisationsschritt einen Teilschritt des Erzeugens eines die pixelweise Differenz zwischen dem Szenen-Gesamtbild und dem Referenz-Gesamtbild repräsentierenden Differenz-Gesamtbildes zur schätzungsweisen Zuordnung jedes Pixels des Szenen-Gesamtbildes zu entweder dem Hintergrund oder einem das zu segmentierende Vordergrundobjekt enthaltenden Vordergrund umfasst. Vorzugsweise wird eine entsprechende, binäre Schnittschablone erzeugt. Im Ergebnis wird eine erste, grobe Abschätzung vorgenommen, wo im Gesamtbild sich das zu segmentierende Vordergrundobjekt befindet. Dieser Schritt ist günstig, da er selbst sehr schnell durchführbar ist und nachfolgende, komplexere Schritte durch die bereits durchgeführte Vorauswahl wesentlich beschleunigt werden. Die Binarisierung des Differenz-Gesamtbildes erfolgt in der Regel über einen Schwellenwertvergleich, bei dem die Bestimmung des Schwellenwertes jedoch unkritisch ist, da es sich nur um eine grobe, vorläufige Abschätzung des Vordergrundes handelt. Im Fall der Personenaufnahme wird der "Vordergrund" von allen aufgenommenen Bereichen der Person gebildet, wobei als Vordergrundobjekt" z.B. nur der Kopf interessiert.

Vorzugsweise im Anschluss an diese Vorauswahl, grundsätzlich aber auch ohne diese durchführbar, erfolgt bei einer vorteilhaften Weiterbildung des Verfahrens die Durchführung eines Farbwertevergleichs wenigstens eines Bereichs eines mehrkanaligen Szenen-Gesamtbildes mit einem vorbestimmten Farbwertebereich zur Einschätzung der Vordergrundpixel als entweder innerhalb oder außerhalb des vorbestimmten Farbwertebereichs liegend. Der genannte Bildbereich ist dabei vorzugsweise der in einem vorangehenden Schritt bestimmte "Vordergrund". Im Fall, dass insbesondere die Kopfregion einer Person segmentiert werden soll, bietet es sich an, als vorbestimmten Farbbereich "Hautfarbe" zu wählen. Dieser Farbbereich stellt, wie dem Fachmann bekannt ist, einen sehr kleinen Ausschnitt des Gesamtspektrums dar. Je nach Wahl des speziellen Farbraums, z.B. HSI, kann es ausreichen zu diesem Farbvergleich nur eines der Einzelkanalbilder, z.B. das des Farbwinkels, heranzuziehen. Mit diesem Schritt können z.B. Hautbereiche von Kleidungsbereichen unterschieden werden.

Vorzugsweise im Anschluss an eine oder beide der vorbeschriebenen Vorauswahlen, grundsätzlich aber auch ohne diese durchführbar, erfolgt bei einer vorteilhaften Weiterbildung des Verfahrens eine geometrische Formenabschätzung durch Template-Matching. Dies ist eine dem Fachmann bekannte Methode der Formenerkennung, die allerdings vergleichsweise rechenintensiv ist. Es ist daher bevorzugt vorgesehen, dass das Template-Matching nur im Bereich derjenigen Pixel durchgeführt wird, die zuvor dem Vordergrund zugeordnet und/oder als innerhalb eines vorbestimmten Farbwertebereichs liegend eingeschätzt wurden. Wird dieser Schritt beispielsweise im Anschluss an beide der genannten Vorauswahlen durchgeführt, bietet er eine günstige Möglichkeit, z.B. die interessierende Kopfregion von ebenfalls im Bild enthaltenen Händen oder Armen zu unterscheiden.

Weitere Einzelheiten der Erfindung, ergeben sich aus der nachstehenden, ausführlichen Beschreibung und den beigefügten Zeichnungen, in denen bevorzugte Ausführungsformen der Erfindung beispielhaft veranschaulicht sind.

In den Zeichnungen zeigen:
- Figur 1:: ein Übersichts-Flussdiagramm des erfindungsgemäßen Verfahrens bei Anwendung auf ein mehrkanaliges Szenenbild zur Segmentierung eines Personenportraits,
- Figur 2:: ein detaillierteres Flussdiagramm des Segmentierungsschrittes in Fig. 1,
- Figur 3:: ein detaillierteres Flussdiagramm der Differenzbildberechnung gemäß einer ersten Ausführungsform des erfindungsgemäßen Verfahrens,
- Figur 4:: ein detaillierteres Flussdiagramm der Bildbereitstellung gemäß einer zweiten Ausführungsform des erfindungsgemäßen Verfahrens,
- Figur 5:: eine schematische Darstellung einer erfindungsgemäßen Vorrichtung.

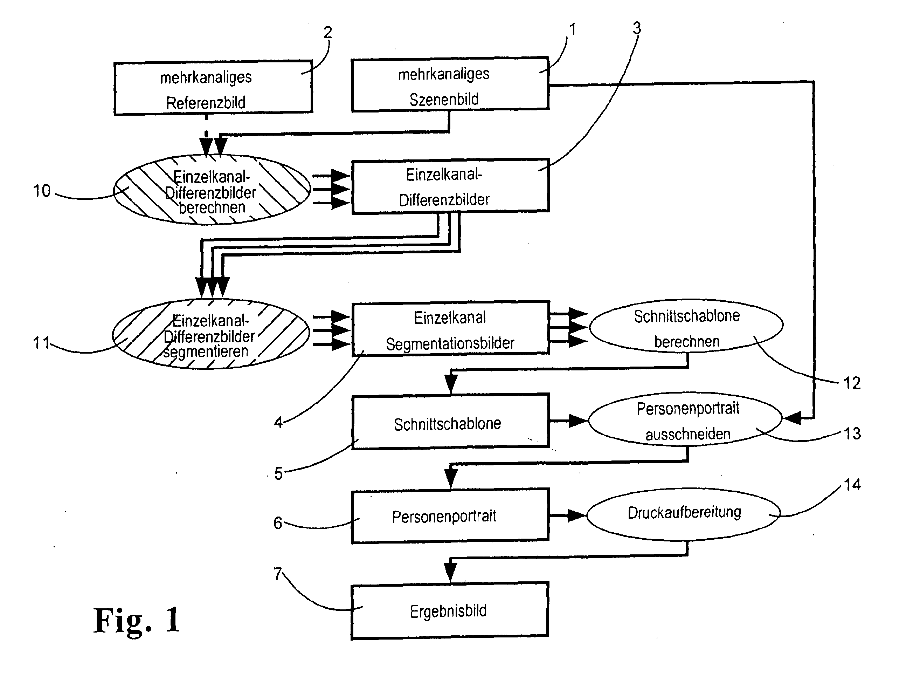

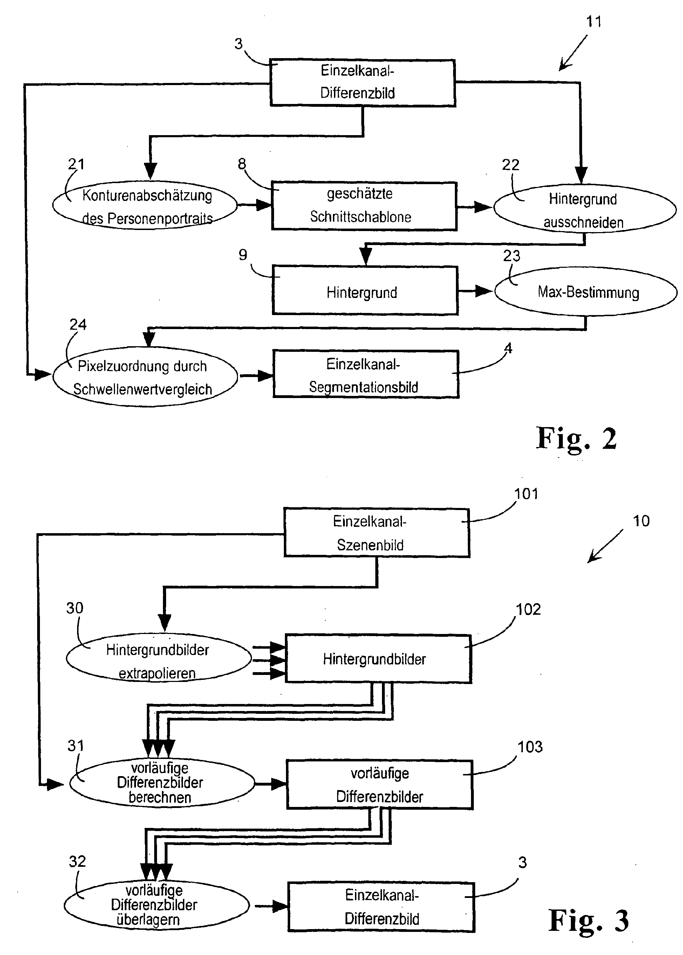

Fig. 1 zeigt ein Flussdiagramm, dass eine Übersicht über das erfindungsgemäße Verfahren gibt. Das Flussdiagramm geht davon aus, dass ein mehrkanaliges Szenenbild 1 durch geeignete Maßnahmen, für die weiter unten zwei konkrete Beispiele angegeben werden sollen, digital zur Verfügung gestellt wird. Weiter kann bei einer Ausführungsform des erfindungsgemäßen Verfahrens auch ein mehrkanaliges Referenzbild 2 durch geeignete Maßnahmen, für die weiter unten ein Beispiel gegeben werden soll, bereitgestellt werden. Bei einer anderen Ausführungsform, die im Zusammenhang mit Fig. 3 näher erläutert werden soll, erfolgt dagegen eine Bereitstellung mehrerer einkanaliger Referenzbilder.

Ohne Beschränkung der Allgemeinheit bezieht sich die folgende, spezielle Beschreibung auf den Fall, dass es sich bei dem mehrkanaligen Szenenbild 1 um eine formatfüllende, digitale oder digitalisierte Farbfotographie eines menschlichen Portraits, etwa nach Art eines Passbildes, handelt. Im Hinblick auf das mehrkanalige Referenzbild bezieht sich diese spezielle Beschreibung, ebenfalls ohne Beschränkung der Allgemeinheit, auf ein in geeigneter Weise erzeugtes Bild des Hintergrundes in gleicher Farbcodierung und gleichem Format wie das Szenenbild.

In den Flussdiagrammen stellen Kästen jeweils Bilder im weiteren Sinn dar, können also einerseits reale Wiedergaben auf einem Medium wie z.B. Papier und andererseits ebenso virtuelle, digitalisierte Repräsentationen im Speicher eines Computers oder einer anderen Datenverarbeitungsvorrichtung bezeichnen. Ovale stellen jeweils Bildverarbeitungsoperationen dar, die auf die mit eingehenden Pfeilen verbundenen Bilder angewendet werden und die die mit ausgehenden Pfeilen verbundenen Bilder als Resultat erzeugen. Der gestrichelte Pfeil in Fig. 1 soll darauf hinweisen, dass die Eingabe eines mehrkanaligen Referenzbildes 2 in den Differenzbilderzeugungsschritt 10 nicht bei allen Ausführungsformen der Erfindung erforderlich ist.

Bei einer Ausführungsform wird in Schritt 10 in Fig. 1 aus dem Szenenbild 1 und dem Referenzbild 2 ein Satz Differenzbilder 3 erzeugt, indem die jeweils einander entsprechenden Einzelkanalbilder pixelweise voneinander subtrahiert werden. Ggf. kann im Anschluss eine Berechnung der Absolutbeträge der Pixelwerte durchgeführt werden, um Bilder mit einheitlichen Vorzeichen der Pixelwerte zu generieren. Eine besondere Ausführungsform von Schritt 10, die kein mehrkanaliges Referenzbild erfordert ist detailliert in Fig. 3 dargestellt.

In Schritt 11 erfolgt der wichtige Schritt der Segmentierung, bei dem in jedem Einzelkanalbild eine Zuordnung jedes einzelnen Pixels zu entweder dem Vordergrundobjekt oder dem Hintergrund erfolgt. Dieser Schritt wird in Fig. 2 weiter unten detaillierter beschrieben. Als Resultat liefert Schritt 11 einen Satz Segmentationsbilder 4, die vorteilhafter Weise binarisiert sind, d.h. alle dem Vordergrundobjekt zugeordneten Pixel tragen z.B. den Pixelwert eins und alle dem Hintergrund zugeordneten Pixel tragen z.B. den Pixelwert null.

In Schritt 12 werden die Einzelkanal-Segmentationsbilder zu einer Gesamt-Schnittschablone 5 überlagert, die vorteilhafter Weise wieder in binärer Form gespeichert wird. Bei einer bevorzugten Ausführungsform des erfindungsgemäßen Verfahrens entsteht die Schnittschablone durch eine pixelweise ODER-Verknüpfung der binären Segmentationsbilder 4.

In Schritt 13 erfolgt die eigentliche Extraktion des Vordergrundobjektes aus dem Szenenbild 1. Dies erfolgt bevorzugter Weise durch eine pixelweise Multiplikation der binären Schnittschablone 5 mit dem Szenenbild 1. Bei manchen Codierungsformen enthält das Szenenbild zusätzlich zu den Farbkanälen mindestens einen weiteren Kanal, in dem zusätzliche pixelbezogene Informationen speicherbar sind. In einem solchen Fall kann an Stelle der Multiplikation auch eine Markierung der einzelnen Pixel in diesem Zusatzkanal gemäß der Schnittschablone erfolgen. Als Resultat liefert Schritt 13 ein als Personenportrait 6 bezeichnetes Bild des Vordergrundobjektes mit eliminiertem Hintergrund.

In Anwendungen, bei denen der Ausdruck eines realen Bildes angestrebt wird, kann das Personenportrait 6 einem Druckaufbereitungsschritt 14 unterworfen werden, der es gemäß den Erwartungen eines Ausgabegerätes, wie z.B. eines Laserdruckers, zu dem Ergebnisbild 7 umcodiert. Außerdem kann der Schritt 14 zusätzliche Operationen z.B. zur Kontrasterhöhung o.ä. umfassen. Soll dagegen das Ergebnisbild 7 dagegen weiter verarbeitet werden, z.B. im Rahmen einer Extraktion biometrischer Merkmale, kann Schritt 14 auch ggf. ein Leerschritt sein und können Ergebnisbild 7 und Personenportrait 6 identisch sein.

Fig. 2 stellt ein detaillierteres Flussdiagramm des besonders wichtigen Schrittes 11 in Fig. 1, nämlich des eigentlichen Segmentierungsschrittes, dar. Eingangsdaten für Schritt 11 in Fig. 1 stellen die Einzelkanal-Differenzbilder 3 dar. In Fig. 2 ist die Durchführung des Segmentierungsschrittes 11 an einem dieser Einzelkanal-Differenzbilder 3 dargestellt, der ein Einzelkanal-Segmentationsbild 4 liefert. Schritt 11 wird für alle Farbkanäle gesondert, entweder sequentiell oder parallel durchgeführt. Erfindungsgemäß wird im Rahmen des Segmentierungsschrittes 11 zunächst in Schritt 21 eine Konturenabschätzung des Personenportraits vorgenommen. Hierzu wird bevorzugt ein Kantenalgorithmus, vorzugsweise ein Canny-Kantenalgorithmus, auf das Differenzbild 3 angewendet. Dieser liefert die im Bild vorhandenen Kanten, die im Fall eines guten Referenzbildes 2 ausschließlich im Bereich des Vordergrundobjektes auftreten und insbesondere an dessen Übergang zum Hintergrund. Gleichwohl liefert ein Kantenalgorithmus nicht immer zuverlässig geschlossene Linien. Bei der bevorzugten Ausführungsform der Erfindung werden daher anschließend morphologische Operationen durchgeführt, die die erkannten Kanten zu durchgehenden Linien schließen, sodass alle innerhalb der Linien liegenden Pixel eine zusammenhängende Fläche bilden. Um sicher zu gehen, dass die als Vordergrundobjekt abgeschätzte Fläche nicht zu klein ist, können die Kanten z.B. durch Anwendung eines Dilate-Algorithmus geglättet und die eingeschlossene Fläche geringfügig vergrößert werden. Die innerhalb der geschlossenen Kanten liegenden Pixel können im Rahmen einer Binarisierung homogen eingefärbt werden, z.B. indem diesen Pixeln der Wert null zugeordnet wird. Den übrigen Pixeln, die gemäß der Konturenabschätzung vorläufig dem Hintergrund zugeordnet wurden, kann z.B. der Wert eins zugewiesen werden. Als Resultat liefert der Abschätzungsschritt 21 also eine geschätzte, binäre Schnittschablone 8 für den Hintergrund.

In Schritt 22 wird dann z.B. durch Multiplikation des Differenzbildes 3 mit der geschätzten Schnittschablone 8 das abgeschätzte Vordergrundobjekt ausgeblendet. Es entsteht ein Bild 9 des ausgeschnittenen Hintergrundes. Aus diesen Hintergrundpixeln wird in Schritt 23 der maximale Pixelwert bestimmt, der dann als Schwellenwert in dem nachfolgenden Vergleichsschritt 24 zur Zuordnung jedes einzelnen Pixels des Differenzbildes 3 zu entweder dem Vordergrundobjekt oder dem Hintergrund verwendet wird. Dieser Vergleichsschritt 24 stellt die eigentliche Segmentierung dar. Die Schritte 21 bis 23 dienen dagegen vor allem der Ermittlung eines zuverlässigen Schwellenwertes.

Fig. 3 zeigt eine Variante der Berechnung von Einzelkanaldifferenzbildern (Schritt 10 in Fig. 1), für die die Bereitstellung eines mehrkanaligen Referenzbildes 2 nicht erforderlich ist. Sie eignet sich besonders in dem Fall, dass das Szenenbild 1 bereits einen geeigneten Ausschnitt zeigt und keine Möglichkeit besteht, eine "wahre" Aufnahme des Hintergrundes zu erhalten. Dieser Fall ist beispielsweise gegeben, wenn ein Passfoto in Papierform vorliegt. Das Szenenbild 1 kann dann leicht z.B. durch Einscannen erzeugt werden. Die Referenzbilder für die Berechnung der Einzelkanal-Differenzbilder 3 müssen dann durch Extrapolation aus dem Szenenbild bzw. aus dessen Einzelkanalbildern erzeugt werden. Bei der bevorzugten Ausführungsform der Erfindung werden die oberste Pixelzeile und die beiden äußersten Pixelspalten jedes Einzelkanal-Szenenbildes 101 in Schritt 30 senkrecht zu ihrer Ausbreitungsrichtung zu jeweils einem Hintergrundbild 102 mit demselben Format wie das Einzelkanal-Szenenbild 101 vervielfacht. Anschließend werden in Schritt 31 aus den so entstandenen Hintergrundbildern 102 und dem Einzelkanal-Szenenbild durch pixelweise Subtraktion vorläufige Differenzbilder 103 erstellt, die im anschließenden Schritt 32 zu dem Einzelkanal-Differenzbild 3 überlagert werden.

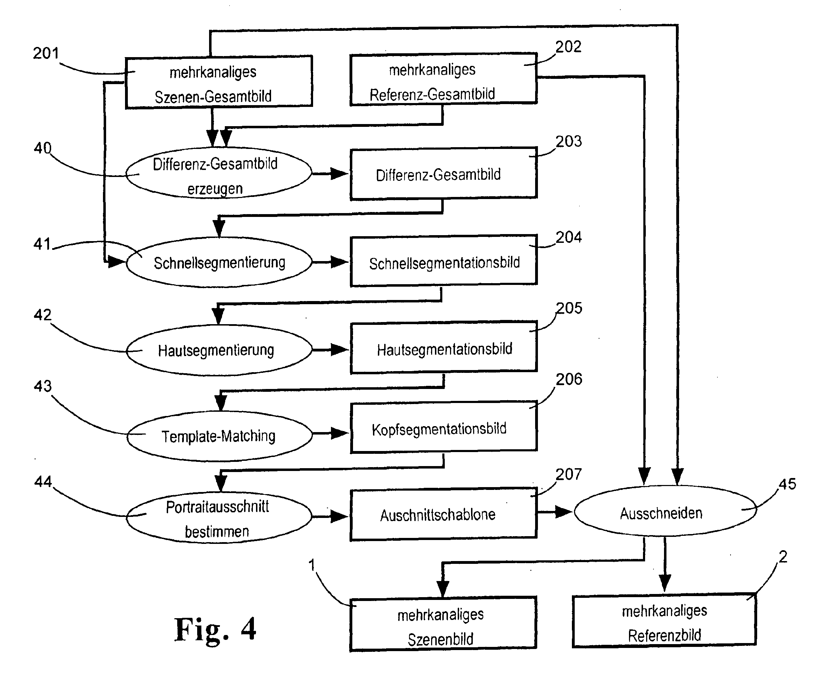

Fig. 4 zeigt eine bevorzugte Variante der Bereitstellung eines Szenenbildes 1 und eines Referenzbildes 2 im Fall, dass ein Szenen-Gesamtbild 201 einen großen Raumwinkel erfasst und das zu segmentierende Vordergrundobjekt nicht formatfüllend dargestellt ist. Weiter wird vorausgesetzt, dass die Möglichkeit besteht, zeitnah zu dem Szenen-Gesamtbild 201 ein Referenz-Gesamtbild 202 unter demselben Blickwinkel aufzunehmen, jedoch ohne den das Vordergrundobjekt enthaltenden Vordergrund. Dieser Fall ist z.B. gegeben, wenn eine fest installierte Digitalkamera verwendet wird und Personen ohne besondere Vorkehrungen hinsichtlich ihrer Positionierung aufgenommen werden sollen. "Vordergrund" ist dabei der gesamte, von der Person ausgefüllte Bereich, "Vordergrundobjekt" z.B. deren Kopf- und Schulterbereich. Unmittelbar nach oder vor der Aufnahme der Person kann mit denselben Kameraeinstellungen eine Aufnahme des Hintergrundes gemacht werden. Sind keine Änderungen der Beleuchtungsverhältnisse zu befürchten, etwa weil stets mit standardisierter, künstlicher Beleuchtung gearbeitet wird, ist es auch möglich, ein gespeichertes Referenz-Gesamtbild zu verwenden, dass nicht zeitnah aufgenommen wurde. Ziel der Bildvorbereitung ist es, aus den aufgenommenen Szenenund Referenz-Gesamtbildern 201, 202 ein mehrkanaliges Szenenbild 1, in dem formatfüllend ein Personenportrait dargestellt ist, und ein mehrkanaliges Referenzbild 2 des entsprechenden Hintergrundausschnitts zu erzeugen, die als Eingangsdaten für den in Fig. 1 dargestellten Verfahrensabschnitt dienen können.

Bei der bevorzugten Ausführungsform der Erfindung erfolgt die Bildvorbereitung im Wesentlichen dreistufig. Allerdings können die einzelnen Stufen je nach speziellem Anwendungsfall auch isoliert oder in beliebiger Unterkombination angewendet werden.

In einer ersten Stufe wird eine grobe Schnellsegmentierung durchgeführt. Hierzu wird aus dem Szenen-Gesamtbild 201 und dem Referenz-Gesamtbild 202 zunächst in Schritt 40 durch pixelweise Subtraktion ein Differenz-Gesamtbild 203 erzeugt. Dem Subtraktionsschritt 40 können je ein oder mehrerer Einzelkanal-Gesamtbilder oder auch die mehrkanaligen Gesamtbilder unterworfen werden. Oft ist es ausreichend die grobe Schnellsegmentierung der ersten Stufe in nur einem Farbkanal durchzuführen. Die Schnellsegmentierung selbst erfolgt in Schritt 41 durch einen Schwellenwertvergleich in dem oder den Differenz-Gesamtbildern 203, wobei die Schwellenwert-Bestimmung unkritisch ist, da zum einen eine sehr gute Übereinstimmung der Hintergrundpixel angenommen werden kann und zum anderen ein ungefähres Ergebnis völlig ausreichend ist. Der Schritt 41 der Schnellsegmentierung umfasst die Erstellung einer binären Schnittschablone, mit der, angewendet auf das Szenen-Gesamtbild, ein Schnellsegmentationsbild 204 erzeugt wird, bei dem die zum Vordergrund gehörig segmentierten Pixel die entsprechenden Werte des Szenen-Gesamtbildes und die übrigen Pixel den Wert null tragen. Selbstverständlich ist auch eine andere Unterteilung, etwa durch Markierung in einem zusätzlichen Informationskanal möglich.

In der zweiten Stufe wird in Schritt 42 eine Hautsegmentierung durchgeführt zur Trennung von hautfarbenen Vordergrundbereichen, wie z.B. Gesicht und Hände, von anderen Vordergrundbereichen, z.B. bekleidete Flächen, wie Brust und Beine. Dabei werden in dem Schnellsegmentationsbild 204 nur die nicht null gesetzten Pixel berücksichtigt, was den Schritt wesentlich beschleunigt. Diejenigen Pixel, deren Werte sich innerhalb des als "Hautfarbe" definierten Bereichs des Farbraums befinden, werden vorzugsweise auf eins gesetzt, die übrigen auf null. Es entsteht so ein binäres Hautsegmentationsbild 205, in dem nur die hautfarbenen Bereiche des Szenen-Gesamtbildes 201 besonders markiert sind.

In der dritten Stufe wird in Schritt 43 zur Unterscheidung von Gesicht und Händen oder Armen ein sog. Template-Matching durchgeführt. Bei diesem grundsätzlich bekannten Verfahren wird in einem Bild automatisch nach bestimmten Formen gesucht, die einer vorgegebenen Vorlage entsprechen. Zur Selektion des Kopfbereichs eignet sich besonders eine Vorlage deren Form dem oberen Drittel eines menschlichen Kopfes entspricht. Da das Template-Matching vergleichsweise rechenintensiv ist, wird es vorzugsweise nur auf diejenigen Pixel angewendet, die in den vorhergehenden beiden Stufen selektiert wurden, d.h. z.B. auf die von Null verschiedenen Pixel in dem Hautsegmentationsbild 205. Als Resultat entsteht ein binäres Kopfsegmentationsbild 206, in dem lediglich der selektierte Kopfbereich, z.B. das obere Drittel markiert ist. Um einen Passbild-ähnlichen Ausschnitt zu erhalten, wird weiter in Schritt 44 anhand der Größe und Position des selektierten Kopfbereichs ein Portraitausschnitt gewählt, der, ausgehend von einer normalen Anatomie und Haltung einen Bildbereich repräsentiert, in dem Kopf und Schultern der Person formatfüllend enthalten sind. Als Resultat wird eine binäre Ausschnittschablone 207 erzeugt, in der alle innerhalb des Portraitausschnitts liegenden Pixel auf eins, alle übrigen auf Null gesetzt sind.

In dem abschließenden Schritt 45 werden dann z.B. durch Multiplikation der Ausschnittschablone 207 mit dem Szenen-Gesamtbild 201 und dem Referenz-Gesamtbild 202 und anschließende Eliminierung der Null-Pixel ein Szenenbild 1 und ein Referenzbild 2 erzeugt, die als Eingangsdaten für den in Fig. 1 dargestellten Verfahrensabschnitt dienen können.

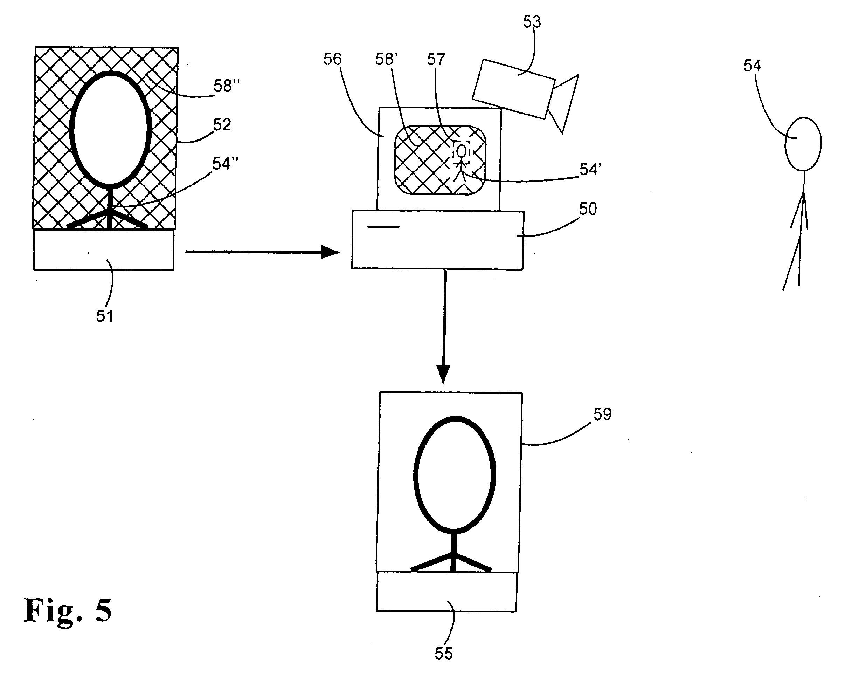

Fig. 5 zeigt eine stark schematisierte Darstellung einer erfindungsgemäßen Vorrichtung zur Durchführung des erfindungsgemäßen Verfahrens in einer bevorzugten Ausführungsform. Kernstück der Vorrichtung ist ein Computer 50, der in geeigneter Weise programmiert ist, sodass Bildverarbeitungsmittel und Steuerungsmittel zur Ansteuerung der Bildverarbeitungs- und Bildausgabemittel sowie von Bildbereitstellungsmitteln softwaremäßig in dem Computer integriert sind. In dem gezeigten Ausführungsbeispiel sind zwei Arten von Bildbereitstellungsmitteln dargestellt, nämlich ein Scanner 51, mit dem beispielsweise Passfotos 52 eingescannt werden können, und eine fest installierte Digitalkamera 53, mit der Aufnahmen von Personen 54 vor einem nicht näher dargestellten Hintergrund gemacht werden können. Weiter ist als Bildausgabemittel ein Drucker 55 angeschlossen. Auf dem Bildschirm 56 des Computers 50 ist ein von der Kamera 53 aufgenommenes Szenen-Gesamtbild dargestellt, das ein Bild 54' der aufgenommenen Person 54 enthält. Der gestrichelt eingezeichnete Rahmen 57 zeigt den gewünschten Portraitausschnitt, der nach erfindungsgemäßer Bearbeitung vom Hintergrund 58' befreit am Drucker 55 als Ergebnisbild 59 ausgegeben werden kann. Ebenso kann ein vom Scanner 51 eingescanntes Passbild 54" der Person 54 nach erfindungsgemäßer Bearbeitung vom Hintergrund 58" befreit am Drucker 55 ausgegeben werden.

Selbstverständlich ist die vorliegende Erfindung, die in den Ansprüchen definiert wird, nicht auf die gezeigten Ausführungsbeispiele beschränkt. Viele weitere, vorteilhafte Varianten sind denkbar. So können insbesondere einzelne Verfahrensschritte isoliert, in beliebiger Unterkombination oder kombiniert mit weiteren, hier nicht näher erläuterten Verfahrensschritten verbunden werden. Auch die Bildein- und -ausgabe ist nicht auf die genannten Verfahren des Scannens und Fotografierens beschränkt. Auch wird der Fachmann erkennen, dass die in den Flussdiagrammen als Bilder dargestellten Zwischenergebnisse nicht in allen Fällen notwendig erzeugt werden müssen. Die Flussdiagramme dienen vielmehr der gedanklichen Strukturierung des erfindungsgemäßen Verfahrens zum Zwecke seiner Veranschaulichung. Schließlich ist selbstverständlich, dass die für einzelne Farbkanäle mehrkanaliger Bilder beschriebenen Schritten analog auch bei monochromen Bildern angewendet werden können. Der Schutzbereich der Erfindung wird daher nur durch die Ansprüche eingeschränkt.

## Patentansprüche

1. Automatisches Verfahren zur Segmentierung eines Vordergrundobjektes in einem Bild, umfassend die Verfahrensschritte:
- Bereitstellen eines digitalen Szenenbildes (1; 101) mit einem zu segmentierenden Vordergrundobjekt und einem Hintergrund,
- Bereitstellen eines den Hintergrund repräsentierenden, digitalen Referenzbildes (2; 102),
- Erzeugen eines die pixelweise Differenz zwischen dem Szenenbild (1, 101) und dem Referenzbild (2; 102) repräsentierenden Differenzbildes (3; 103),
- pixelweises Vergleichen des Differenzbildes (3) mit einem bestimmten Schwellenwert,
- Zuordnung jedes Pixels des Szenenbildes (1, 101) zu entweder dem Hintergrund oder dem Vordergrundobjekt auf Basis des Schwellenwertvergleichs,
- Erzeugung eines das segmentierte Vordergrundobjekt enthaltenden Ergebnisbildes (7),
**dadurch gekennzeichnet, dass** der Schwellenwert festgelegt wird, indem zunächst in dem Differenzbild (3) eine räumliche Abschätzung der dem Vordergrundobjekt zuzuordnenden Pixel aufgrund dessen automatisch abgeschätzter äußerer Konturen vorgenommen und der Schwellenwert dann anhand einer oder mehrerer Eigenschaften des Ensembles der übrigen Pixel des Differenzbildes (3) bestimmt wird.

2. Verfahren nach Anspruch 1, **dadurch gekennzeichnet, dass** zur Ermittlung der abgeschätzten äußeren Konturen des Vordergrundobjektes ein Kantenalgorithmus auf das Differenzbild (3) angewandt wird.

3. Verfahren nach Anspruch 2, **dadurch gekennzeichnet, dass** der Kantenalgorithmus ein Canny-Kantenalgorithmus ist.

4. Verfahren nach einem der Ansprüche 2 oder 3, **dadurch gekennzeichnet, dass** die mittels des Kantenalgorithmus berechneten Kantenzüge mittels morphologischer Operationen geschlossen und alle innerhalb der geschlossenen Kantenzüge liegenden Pixel als zu dem Vordergrundobjekt gehörig abgeschätzt werden.

5. Verfahren nach einem der vorangehenden Ansprüche, **dadurch gekennzeichnet, dass** als Schwellenwert der maximale Pixelwert des Ensembles der übrigen Pixel des Differenzbildes (3) bestimmt wird.

6. Verfahren nach einem der vorangehenden Ansprüche, **dadurch gekennzeichnet, dass** nach der Zuordnung jedes Pixels auf Basis des Schwellenwertvergleichs alle Pixel, die innerhalb einer äußeren Kontur der dem Vordergrundobjekt zugeordneten Pixelfläche liegen und dem Hintergrund zugeordnet sind, dem Vordergrundobjekt zugeordnet werden.

7. Verfahren nach einem der vorangehenden Ansprüche, **dadurch gekennzeichnet, dass** das Szenenbild (101) eines von mehreren Einzelkanalbildern eines mehrkanaligen Ursprungsbildes (1) ist.

8. Verfahren nach Anspruch 7, **dadurch gekennzeichnet, dass** alle aufeinander folgenden Verfahrensschritte bis einschließlich desjenigen der Zuordnung jedes Pixels auf Basis des Schwellenwertvergleichs, in wenigstens zwei Farbkanälen eines mehrere Farbkanäle enthaltenden, mehrkanaligen Ursprungsbildes (1) individuell angewendet werden und zur Erzeugung des Ergebnisbildes (7) dem Vordergrundobjekt alle diejenigen Pixel zugeordnet werden, die auf Basis der individuellen Schwellenwertvergleiche in irgendeinem der Farbkanäle dem Vordergrundobjekt zugeordnet wurden.

9. Verfahren nach einem der vorangehenden Ansprüche, **dadurch gekennzeichnet, dass** zur Bereitstellung des Referenzbildes wenigstens ein Hintergrundbild (102) als Extrapolation der Pixelwerte eines Randbereichs des Szenenbildes (101) erzeugt wird.

10. Verfahren nach Anspruch 9, **dadurch gekennzeichnet, dass** sich der zu extrapolierende Randbereich aus einer oder mehreren Zeilen bzw. Spalten des oberen bzw. eines seitlichen Randbereichs des Szenenbildes (101) zusammensetzt.

11. Verfahren nach Anspruch 10, **dadurch gekennzeichnet, dass** zur Erzeugung eines Differenzbildes (3) mehrere vorläufige Differenzbilder (103) erzeugt werden, wobei jeweils eines von mehreren Hintergrundbildem (102), die aus unterschiedlichen Randbereichen extrapoliert wurden, als Referenzbild dient.

12. Verfahren nach Anspruch 11, **dadurch gekennzeichnet, dass** mehrere vorläufige Differenzbilder (103) zu einem Differenzbild (3) überlagert werden.

13. Verfahren nach einem der Ansprüche 1 bis 8, **dadurch gekennzeichnet, dass** das Referenzbild (2) ein weiteres Bild desselben Ausschnitts wie das Szenenbild (1) mit dem Hintergrund und ohne das zu segmentierende Vordergrundobjekt ist.

14. Verfahren nach Anspruch 13, **dadurch gekennzeichnet, dass** das Szenenbild (1) und das Referenzbild (2) einander entsprechende Ausschnitte aus je einem größeren Gesamtbild (201; 202) sind, wobei die Ausschnitte mittels eines zusätzlichen Verfahrensschritts zur automatischen Lokalisation eines interessierenden Gegenstandes in dem Szenen-Gesamtbild (201) erfolgt.

15. Verfahren nach Anspruch 14, **dadurch gekennzeichnet, dass** der Lokalisationsschritt einen Teilschritt des Erzeugens eines die pixelweise Differenz zwischen dem Szenen-Gesamtbild (201) und dem Referenz-Gesamtbild (202) repräsentierenden Differenz-Gesamtbildes (203) zur vorläufigen Zuordnung jedes Pixels des Szenen-Gesamtbildes (201) zu entweder dem Hintergrund oder einem das zu segmentierende Vordergrundobjekt enthaltenden Vordergrund umfasst.

16. Verfahren nach einem der Ansprüche 14 oder 15, **dadurch gekennzeichnet, dass** der Lokalisationsschritt einen Teilschritt der Durchführung eines Farbwertevergleichs wenigstens eines Bereichs eines mehrkanaligen Szenen-Gesamtbildes (201) mit einem vorbestimmten Farbwertebereich umfasst zur Einschätzung der Vordergrundpixel als entweder innerhalb oder außerhalb des vorbestimmten Farbwertebereichs liegend.

17. Verfahren nach Anspruch 16, **dadurch gekennzeichnet, dass** der Farbwertevergleich nur im Bereich derjenigen Pixel durchgeführt wird, die zuvor dem Vordergrund zugeordnet wurden.

18. Verfahren nach einem der Ansprüche 14 bis 17, **dadurch gekennzeichnet, dass** der Lokalisationsschritt einen Teilschritt der geometrischen Formenabschätzung durch Template-Matching umfasst.

19. Verfahren nach Anspruch 18, **dadurch gekennzeichnet, dass** das Template-Matching nur im Bereich derjenigen Pixel durchgeführt wird, die zuvor dem Vordergrund zugeordnet und/oder als innerhalb eines vorbestimmten Farbwertebereichs liegend eingeschätzt wurden.

20. Vorrichtung zur Segmentierung eines Vordergrundobjektes in einem Bild, umfassend:
- Bildbereitstellungsmittel (51, 53) zum Bereitstellen eines digitalen Szenenbildes (1; 101) mit einem zu segmentierenden Vordergrundobjekt (54', 54") und einem Hintergrund (58', 58") und zum Bereitstellen eines den Hintergrund repräsentierenden digitalen Referenzbildes (2; 102),
- Bildbearbeitungsmittel (50) zum Erzeugen und Bearbeiten von digitalen Bildern aufgrund mathematischer und/oder logischer Operationen,
- Bildausgabemittel (55) zur Ausgabe eines von den Bildbearbeitungsmitteln erzeugten Ergebnisbildes (59),
- Steuerungsmittel (50) zur Ansteuerung der Bildbereitstellung-, Bildbearbeitungs- und Bildausgabemittel (51, 53; 50; 55) nach einem vorgegeben Ablaufplan,
**dadurch gekennzeichnet, dass** die Steuerungsmittel (50) zur Durchführung, eines Verfahrens nach einem der vorangehenden Ansprüche eingerichtet sind.

21. Vorrichtung nach Anspruch 20, **dadurch gekennzeichnet, dass** die Bildbereitstellungsmittel eine Digitalkamera (53) und/oder einen Scanner (51) umfassen.

22. Vorrichtung nach einem der Ansprüche 20 oder 21, **dadurch gekennzeichnet, dass** die Bildbearbeitungsmittel und die Steuerungsmittel in einer digitalen Datenverarbeitungsanlage (50) integriert sind.

## Claims

1. Automatic method for segmenting a foreground object in an image, which method comprises the procedural steps:
- provisioning a digital still image (1; 101) having a foreground object requiring to be segmented and a background,
- provisioning a digital reference image (2; 102) representing the background,
- producing a differential image (3; 103) representing the pixel-by-pixel difference between the still image (1, 101) and reference image (2; 102),
- comparing the differential image (3) with a specific threshold value pixel-by-pixel,
- assigning each pixel in the still image (1, 101) either to the background or to the foreground object based on the threshold-value comparison, and
- producing a result image (7) containing the segmented foreground object,
**characterized in that**
the threshold value is established by first undertaking a spatial estimation in the differential image (3) of the pixels to be assigned to the foreground object based on its automatically estimated external contours, then determining the threshold value using one or more properties of the set of remaining pixels in the differential image (3).

2. Method according to Claim 1 **characterized in that** an edge detection algorithm is applied to the differential image (3) to ascertain the estimated external contours of the foreground object.

3. Method according to Claim 2 **characterized in that** the edge detection algorithm is a Canny edge detection algorithm.

4. Method according to one of Claims 2 or 3 **characterized in that** the edge trails calculated using the edge detection algorithm are closed by means of morphological operations and all pixels located within the closed edge trails are deemed to belong to the foreground object.

5. Method according to one of the preceding Claims **characterized in that** the maximum pixel value of the set of remaining pixels in the differential image (3) is determined as the threshold value.

6. Method according to one of the preceding Claims **characterized in that** after each pixel has been assigned based on the threshold-value comparison, all pixels that are located within an external contour of the pixel area assigned to the foreground object and have been assigned to the background will be assigned to the foreground object.

7. Method according to one of the preceding Claims **characterized in that** the still image (101) is one of a plurality of single-channel images of a multi-channel source image (1).

8. Method according to Claim 7 **characterized in that** all sequential procedural steps up to and including that of assigning each pixel based on the threshold-value comparison are applied individually in at least two color channels of a multi-channel source image (1) containing a plurality of color channels and that, to produce the result image (7), all the pixels that were assigned on the basis of the individual threshold-value comparisons in any of the color channels to the foreground object will be assigned to the foreground object.

9. Method according to one of the preceding Claims **characterized in that**, to provision the reference image, at least one background image (102) is produced as an extrapolation of the pixel values of a boundary area of the still image (101).

10. Method according to Claim 9 **characterized in that** the boundary area requiring to be extrapolated consists of one or more rows or, as the case may be, columns of the top or, as the case may be, a lateral boundary area of the still image (101).

11. Method according to Claim 10 **characterized in that**, to produce a differential image (3), several provisional differential images (103) are produced, with in each case one of a plurality of background images (102) extrapolated from different boundary areas serving as a reference image.

12. Method according to Claim 11 **characterized in that** several provisional differential images (103) are overlaid to produce a differential image (3).

13. Method according to one of Claims 1 to 8 **characterized in that** the reference image (2) is a further image of the same section as the still image (1) with the background and without the foreground object requiring to be segmented.

14. Method according to Claim 13 **characterized in that** the still image (1) and reference image (2) are mutually corresponding sections from in each case one larger overall image (201; 202), with said sections resulting from applying an additional procedural step for automatically localizing an interesting object in the overall still image (201).

15. Method according to Claim 14 **characterized in that** the localizing step includes a partial step of producing an overall differential image (203) that represents the pixel-by-pixel difference between the overall still image (201) and the overall reference image (202) and serves to provisionally assign each pixel in the overall still image (201) to either the background or to a foreground containing the foreground object requiring to be segmented.

16. Method according to one of Claims 14 or 15 **characterized in that** the localizing step includes a partial step of performing a color-value comparison of at least one area of a multi-channel overall still image (201) with a pre-determined color-value area for assessing the foreground pixels as being located either inside or outside the pre-determined color-value area.

17. Method according to Claim 16 **characterized in that** the color-value comparison is performed only in the area of the pixels previously assigned to the foreground.

18. Method according to one of Claims 14 to 17 **characterized in that** the localizing step includes a partial step of geometric shape estimating through template matching.

19. Method according to Claim 18 **characterized in that** template matching is performed only in the area of the pixels previously assigned to the foreground and/or assessed to be located within a pre-determined color-value area.

20. Device for segmenting a foreground object in an image, which device comprises:
- image-provisioning means (51, 53) for provisioning a digital still image (1; 101) having a foreground object (54', 54") requiring to be segmented and a background (58', 58"), and for provisioning a digital reference image (2; 102) representing the background,
- image-processing means (50) for producing and processing digital images based on mathematical and/or logical operations,
- image-outputting means (55) for outputting a result image (59) produced by the image-processing means,
- control means (50) for controlling the image-provisioning, image-processing, and image-outputting means (51, 53; 50; 55) according to a specified flow scheme,
**characterized in that**
the control means (50) are equipped for implementing a method according to one of the preceding Claims.

21. Device according to Claim 20 **characterized in that** the image-provisioning means include a digital camera (53) and/or a scanner (51).

22. Device according to one of Claims 20 or 21 **characterized in that** the image-processing means and control means are integrated in a digital data processing system (50).

## Revendications

1. Procédé automatique pour la segmentation d'un objet d'avant-plan d'une image, comprenant les étapes suivantes:
- Mise à disposition d'une image numérique de situation (1; 101) avec un objet d'avant-plan à segmenter et un arrière-plan,
- Mise à disposition d'une image numérique de référence représentant l'arrière-plan (2; 102),
- Génération d'une image différentielle (3; 103) représentant la différence, par pixel, entre l'image de situation (1, 101) et l'image de référence (2; 102),
- Comparaison, pixel par pixel de l'image différentielle (3) avec une valeur de seuil déterminée,
- Association de chaque pixel de l'image de situation (1, 101) soit à l'arrière-plan soit à l'objet d'avant-plan, sur la base de la comparaison avec la valeur de seuil,
- Génération d'une image de résultat(7) comprenant l'objet d'avant-plan à segmenter,
**caractérisé en ce que**
la valeur de seuil est établie en procédant d'abord, dans l'image différentielle (3), à une estimation spatiale des pixels associés à l'objet d'avant-plan, en raison de leurs contours extérieurs évalués automatiquement, et en déterminant ensuite la valeur de seuil sur la base d'une ou de plusieurs propriétés de l'ensemble des pixels restants de l'image différentielle (3).

2. Procédé selon la revendication 1, **caractérisé en ce que** pour la détection des contours extérieurs estimés de l'objet d'avant-plan un algorithme de détection de contour est appliqué à l'image différentielle (3).

3. Procédé selon la revendication 2, **caractérisé en ce que** l'algorithme de détection de contour est un algorithme de contour de Canny"

4. Procédé selon l'une des revendications 2 et 3, **caractérisé en ce que** les tracés de contour, calculés en utilisant l'algorithme de détection de contour sont fermés au moyen d'opérations morphologiques et que tous les pixels situés à l'intérieur des tracés de contours fermés sont évalués comme appartenant à l'objet d'avant-plan.

5. Procédé selon l'une des revendications précédentes, **caractérisé en ce que** l'image différentielle (3) est déterminée comme valeur de seuil de la valeur maximale de pixels de l'ensemble des pixels restants de l'image différentielle (3).

6. Procédé selon l'une des revendications précédentes, **caractérisé en ce que**, après l'association de chaque pixel sur la base de la comparaison de la valeur de seuil, tous les pixels, situés à l'intérieur d'un contour extérieur de la surface de pixels associée à l'objet d'avant-plan, sont associés à l'objet d'avant-plan.

7. Procédé selon l'une des revendications précédentes, **caractérisé en ce que** l'image de situation (101) est l'une de plusieurs images à canal individuel d'une image d'origine multi-canal (1).

8. Procédé selon la revendication 7, **caractérisé en ce que** toutes les phases opérationnelles se succédant, y compris celle d'association de chaque pixel sur la base de la comparaison de la valeur de seuil, sont appliquées individuellement dans au moins deux canaux de couleur d'une image d'origine (1) multi-canal contenant plusieurs canaux de couleur, et que pour la génération de l'image de résultat (7) sont associés à l'objet d'avant-plan tous les pixels qui ont été associés dans l'un quelconque des canaux de couleur, sur la base des comparaisons individuelles de valeur de seuil.

9. Procédé selon l'une des revendications précédentes, **caractérisé en ce que**, pour la mise à disposition de l'image de référence, au moins une image d'arrière-plan (102) est générée en tant qu'extrapolation des valeurs de pixel d'une zone marginale de l'image de situation (101).

10. Procédé selon la revendication 9, **caractérisé en ce que** la zone marginale à extrapoler consiste en une ou plusieurs lignes ou respectivement colonnes de la zone marginale supérieure ou respectivement d'une zone marginale latérale de l'image de situation (101).

11. Procédé selon la revendication 10, **caractérisé en ce que**, pour la génération d'une image différentielle (3), plusieurs images différentielles provisoires (103) sont générées, l'une de plusieurs images d'arrière-plan (102), ayant été extrapolés de différentes zones marginales, servant respectivement d'image de référence.

12. Procédé selon la revendication 11, **caractérisé en ce que** plusieurs images différentielles provisoires (103) sont superposées pour former une image différentielle (3).

13. Procédé selon l'une des revendications 1 bis 8, **caractérisé en ce que** l'image de référence (2) est une autre image de la même section que l'image de situation (1) avec l'arrière-plan et sans l'objet t d'avant-plan à segmenter.

14. Procédé selon la revendication 13, **caractérisé en ce que** l'image de situation (1) et l'image de référence (2) sont des sections mutuellement correspondantes, respectivement d'une image globale plus grande (201; 202), les sections résultant de l'application d'une étape de procédé supplémentaire pour la localisation automatique d'un objet intéressant dans l'image de situation globale (201).

15. Procédé selon la revendication 14, **caractérisé en ce que** l'étape de localisation comprend une étape partielle de la génération d'une image différentielle (203) représentant la différence pixel par pixel entre l'image de situation globale (201) et l'image de référence globale (202) pour l'association de chaque pixel de l'image de situation globale (201) soit à l'arrière-plan ou soit à un avant-plan comprenant l'objet d'avant-plan à segmenter.

16. Procédé selon l'une des revendications 14 ou 15, **caractérisé en ce que** l'étape de localisation comprend une étape partielle de l'exécution d'une comparaison de couleur au moins d'une zone d'une image de situation globale (201) multi-canal avec une zone de valeur de couleur prédéterminée pour la détermination des pixels d'avant-plan comme étant situés soit à l'intérieur ou soit à l'extérieur de la zone de valeur de couleur prédéterminée.

17. Procédé selon la revendication 16 **caractérisé en ce que** la comparaison de valeurs de couleurs n'est effectuée que dans la zone des pixels ayant été associés auparavant à l'avant-plan.

18. Procédé selon l'une des revendications 14 à 17, **caractérisé en ce que** l'étape de localisation comprend une étape partielle de l'évaluation de la forme géométrique par Template-Matching.

19. Procédé selon la revendication 18, **caractérisé en ce que** le Template-Matching n'est effectué que dans la zone des pixels qui ont été auparavant associés à l'avant-plan et / ou déterminés comme étant situés à l'intérieur d'une zone de valeur de couleur prédéterminée.

20. Dispositif pour la segmentation d'un objet d'avant-plan dans une image, comprenant:
- des moyens de mise à disposition d'image (51, 53) pour la mise à disposition d'une image numérique de situation (1; 101) avec un objet d'avant-plan à segmenter (54', 54*''*) et un arrière-plan (58', 58"), et pour la mise à disposition d'une image numérique de référence (2; 102) représentant l'arrière-plan,
- des moyens de traitement d'image (50) pour la génération et le traitement d'images numériques et / ou analogiques sur la base d'opérations mathématiques et / ou logiques,
- des moyens de sortie d'images (55) pour la sortie d'une image de résultat (59), générée par les moyens de traitement d'images (59),
- des moyens de contrôle (50) pour la commande des moyens de mise à disposition d'images, de traitement d'images et de sortie d'images (51, 53; 50; 55) conformément à un plan d'évolution prédéterminé,
**caractérisé en ce que**
les moyens de commande (50) sont aménagés pour l'exécution d'un procédé selon l'une des revendications précédentes.

21. Dispositif selon la revendication 20, **caractérisé en ce que** les moyens de mise à disposition d'images comprennent une caméra numérique (53) et / ou un scanner (51).

22. Dispositif selon la revendication 20 ou 21, **caractérisé en ce que** les moyens de traitement d'image et les moyens de contrôle sont intégrés dans une installation de traitement de données numérique (50).
